## Europäisches Patentamt
## European Patent Office
## Office européen des brevets

(19)

(11) Veröffentlichungsnummer : **0 143 946**
**B1**

# (12) EUROPÄISCHE PATENTSCHRIFT

(45) Veröffentlichungstag der Patentschrift :
05.04.89

(51) Int. Cl.⁴ : **F 26 B  21/08**, B 01 D  53/26

(21) Anmeldenummer : **84111920.9**

(22) Anmeldetag : **04.10.84**

(54) **Verfahren und Vorrichtung zum Entfeuchten eines Trockengases.**

**Verbunden mit 84903633.0/0157839 (europäische Anmeldenummer/Veröffentlichungsnummer) durch Entscheidung vom 04.06.86.**

(30) Priorität : **04.10.83 DE 3336048**

(43) Veröffentlichungstag der Anmeldung :
**12.06.85 Patentblatt 85/24**

(45) Bekanntmachung des Hinweises auf die Patenterteilung : **05.04.89 Patentblatt 89/14**

(84) Benannte Vertragsstaaten :
**IT**

(56) Entgegenhaltungen :
**DE--A-- 3 145 921**
**FR--A--    930 143**
**US--A-- 2 570 974**
**US--A-- 3 130 021**
**US--A-- 4 351 649**

(73) Patentinhaber : **Oschmann, Klaus**
**Mitterweg 9**
**D-8066 Bergkirchen (DE)**

(72) Erfinder : **Oschmann, Klaus**
**Mitterweg 9**
**D-8066 Bergkirchen (DE)**

(74) Vertreter : **Gustorf, Gerhard, Dipl.-Ing.**
**Patentanwalt Dipl.-Ing. Gerhard Gustorf Bachstrasse 6 A**
**D-8300 Landshut (DE)**

## Beschreibung

Die Erfindung betrifft ein Verfahren zum Entfeuchten eines Trockengases, das nach dem Duchströmen eines zu trocknenden Stoffes in einem Adsorptions Trockenmittel getrocknet und anschließend erhitzt wird, um dann wieder durch den Stoff geleitet zu werden, wobei das Trockenmittel nach Erreichen eines bestimmten Feuchtigkeitsgehaltes gegen ein zwischenzeitlich regeneriertes Trockenmittel ausgetauscht und seinerseits durch Wärmezufuhr regeneriert wird und wobei das Trockengas hintereinander durch eine erste Menge des Trockenmittels und anschließend durch eine zweite Menge des Trockenmittels geleitet wird, die bei vollständiger Sättigung der ersten Menge des Trockenmittels an deren Stelle tritt und durch eine zwischenzeitlich regenerierte, dritte Menge des Trockenmittels ersetzt wird, während die gesättigte, erste Menge des Trockenmittels regeneriert wird.

Die Erfindung betrifft ferner eine Vorrichtung zum Entfeuchten eines zum Trocknen von festen Stoffen, insbesondere von körnigen Kunststoffen dienenden Trockengases mit wenigstens zwei von dem Trockengas durchströmten Trockenmittelbetten, von denen eine Hauptleitung zu dem zu trocknenden Stoff führt.

In der DE-A-31 45 921 sind ein Verfahren und eine Vorrichtung beschrieben und dargestellt, bei denen zwei parallel zueinander geschaltete Trockenmittelbetten vorgesehen sind, von denen jeweils eines von dem Trockengas durchströmt wird, bis dieses am Ausgang des Trockenmittelbettes einen bestimmten Feuchtigkeitsgehalt erreicht ; über eine Umsteuereinrichtung wird dann das Trockengas durch das inzwischen regenerierte Trockenmittelbett geleitet, so daß dann das inzwischen gesättigte, erste Trockenmittelbett regeneriert werden kann.

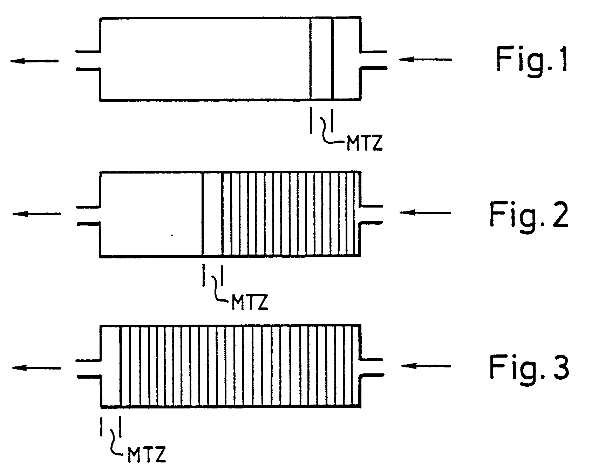

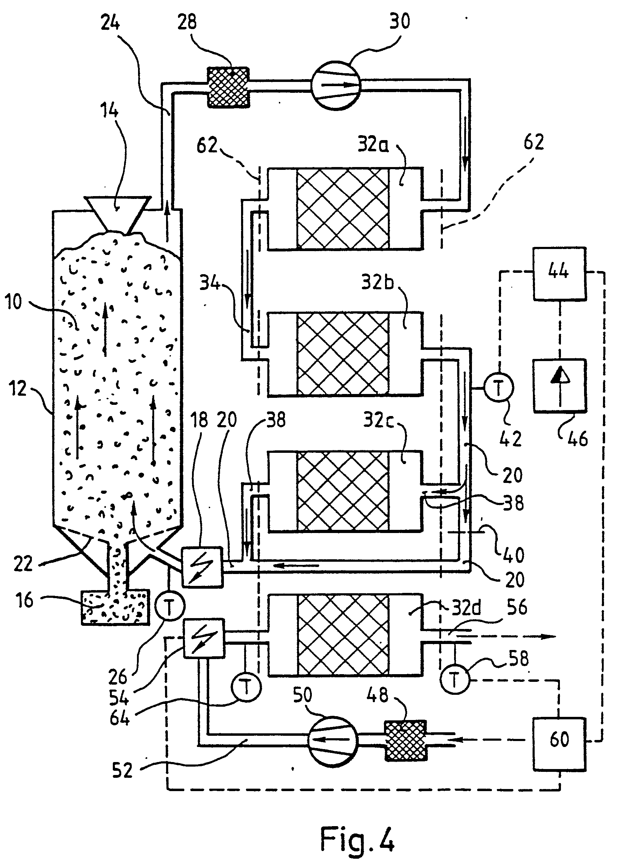

Als Trockenmittel werden im allgemeinen Molekularsiebe, z. B. kristalline Metall-Aluminosilikate oder dgl. verwendet, die bis etwa maximal 20 Gew. % des Trockenmittels für Feuchtigkeit aufnahmefähig sind. In den Figuren 1 bis 3 ist der zeitliche Ablauf der Übertragung der Feuchtigkeit von dem Trockengas auf die Molekularsiebe schematisch dargestellt. Die Feuchtigkeitsübertragung findet dabei in der sogenannten Massenübertragungszone statt (mass transfer zone = MTZ). Die Massenübertragungszone ist dabei derjenige Teil des Trockenmittelbettes, in dem der Feuchtigkeitsgehalt des Trockengases von der Eintrittskonzentration auf die Austrittskonzentration verringert wird. Figur 1 zeigt dabei ein frisch regeneriertes Trockenmittelbett. Mit zunehmender Sättigung eines Teils des Bettes wandert die Massenübertragungszone, wie Figur 2 zeigt, in Richtung Austritt des Bettes. Wenn beim Zustand der Figur 3 die Massenübertragungszone das Ende des Trockenmittelbettes erreicht hat, wird der optimale Taupunkt überschritten. Wenn aber das Trockenmittel bis zur maximalen Absorptionsfähigkeit ausgenutzt wird (Figur 3), ergibt sich der Nachteil, das das Trockengas am Austritt des Trockenmittelbettes zu feucht ist.

Aus der US-A 3 130 021 ist ein Trocknungssystem mit drei Trockenmittelbetten bekannt, von denen jeweils zwei von dem Trockengas durchströmt werden, während das dritte zunächst durch Heißgas und dann durch ein Kühlmedium regeneriert wird. Die Trockenmittelbetten sind ortsfest angeordnet, und die Umsteuerung der Gasströme erfolgt über eine Vielzahl von Ventilen.

Der Erfindung liegt die Aufgabe zugrunde, ein Verfahren und eine Vorrichtung zum Entfeuchten eines Trockengases zur Verfügung zu stellen, bei denen durch bessere Ausnutzung der dem Prozeß zugeführten Energie bereits während der Entfeuchtung das Trockengas aufgeheizt wird.

Bei dem angegebenen Verfahren wird diese Aufgabe erfindungsgemäß dadurch gelöst, daß das Trockengas hinter der zweiten Menge des Trockenmittels in einem Teilgasstrom durch die dritte, inzwischen thermisch regenerierte Menge des Trockenmittels geleitet und hinter dieser dem zu dem zu trocknenden Stoff geleiteten, die dritte Trockenmittelmenge umgehenden Hauptgasstrom wieder zugeführt wird und daß jeweils eine vierte Menge des Trockenmittels zur Regenerierung von einem Wärmemedium durchströmt ist.

Bei der gattungsgemäßen Vorrichtung ist als Lösung der angegebenen Aufgabe vorgesehen, daß vier in gleichbleibender Reihenfolge gegeneinander austauschbare Trockenmittelbetten vorgesehen sind, von denen das vierte Trockenmittelbett zur Regenerierung von einem Wärmemedium durchströmt ist, während das erste Trockenmittelbett über eine Verbindungsleitung in Reihe mit dem nachgeschalteten, zweiten Trockenmittelbett verbunden ist, und daß in die Hauptleitung hinter dem zweiten Trockenmittelbett ein Taupunkt-Meßfühler geschaltet ist, der mit einer Steuerschaltung verbunden ist, die eine Umschalteinrichtung betätigt, welche bei vollständiger Sättigung des ersten Trockenmittelbettes an dessen Stelle das zweite Trockenmittelbett setzt, und wobei von der zu dem zu trocknenden Stoff führenden Hauptleitung hinter dem zweiten Trockenmittelbett eine Umgehungsleitung abzweigt und über das zur Hauptleitung parallel geschaltete, dritte Trockenmittelbett führt.

Durch die erfindungsgemäß vorgesehenen Maßnahmen wird bei einem verhältnismäßig geringen apparativen Aufwand das frisch regenerierte, dritte Trockenmittelbett in zweifacher Weise ausgenutzt, denn erstens wird die durch die zuvor erfolgte Regenerierung vorhandene Wärme verwendet, um einen Teil des Trockengases, der zu dem zu trocknenden Stoff geleitet wird, aufzuheizen, und zweitens wird durch diese Wärmeabfuhr das Trockenmittelbett gekühlt, was für die nachfolgende Entfeuchtung des Trockengases erforderlich ist.

Da bei der Regenerierung die Erhitzung des Trockenmittels und die Metallteile bis zur Verdampfung der Feuchte den größten Energieaufwand benötigen, der reine Verdampfungsaufwand jedoch nur gering ist, erbringt diese Betriebsart eine große Ersparnis durch weniger notwendige Regeneriervorgänge und damit geringeren Energieverbrauch.

Vorteilhafte Weiterbildungen der Erfindung ergeben sich aus der nachfolgenden Beschreibung eines Auführungsbeispiels, das in der Zeichnung dargestellt ist.

Es zeigen :

Figuren 1 bis 3 den bereits beschriebenen, verfahrenstechnischen Ablauf in einem Adsorptionstrockenmittelbett,

Figur 4 die schematische Darstellung einer Vorrichtung zum Entfeuchten von Trockengas gemäß der Erfindung,

Figur 5 die schematische Darstellung einer praktischen Ausführungsform mit Karussellanordnung,

Figur 6 eine schematische Seitenansicht in Richtung des Pfeiles VI der Figur 5 und

Figur 7 eine schematische Seitenansicht in Richtung des Pfeiles VII der Figur 5.

In Figur 4 ist schematisch eine Vorrichtung zum Trocknen von körnigen Kunststoffen (Granulat 10), die in einem Trockenbehälter 12 eingefüllt sind, dargestellt. Zum Einfüllen des zu trocknenden Stoffes in den Trockenbehälter 12 dient eine obere Beschickungsöffnung 14, während am Boden eine Entleerungseinrichtung 16 zur Entnahme des getrockneten Stoffes vorgesehen ist.

In den unteren Teil des Trockenbehälters 12 mündet über einen Trockengaserhitzer 18 eine Hauptleitung 20 zur Zuführung eines Trockengases, das im unteren Bereich des Trockenbehälters 12 durch einen Siebboden 22 in das Granulat 10 ausströmt. Das erhitzte Trockengas, im allgemeinen Luft, aber auch Inertgas, Stickstoff oder dergleichen, durchströmt das Granulat 10 von unten nach oben und nimmt dabei die Feuchtigkeit des Granulats auf, wonach es den Trockenbehälter 12 durch eine Ausgangsleitung 24 verläßt.

Ein Thermostat 26 sorgt dafür, daß die Temperatur des in den Trockenbehälter 12 strömenden Trockengases immer konstant bleibt, und ist in bekannter und nicht dargestellter Weise mit dem Trockengaserhitzer 18 elektrisch verbunden.

Die Ausgangsleitung 24 führt durch ein Filter 28, das Staubteilchen zurückhält, zu einem Gebläse 30, welches das feuchte Trockengas in ein erstes Trockenmittelbett 32a drückt.

Das erste Trockenmittelbett 32a ist über eine Verbindungsleitung 34 in Reihe mit einem nachgeschalteten, zweiten Trockenmittelbett 32b verbunden. Vom Ausgang des zweiten Trockenmittelbettes 32b führt die Hauptleitung 20 über den Trockengaserhitzer 18 in den Trockenbehälter 12, während eine Umgehungsleitung 38 durch ein drittes, zuvor regeneriertes Trockenmittelbett 32c führt. Die Umgehungsleitung 38 mündet hinter dem dritten Trockenmittelbett 32c wieder in die Hauptleitung 20. Eine Drossel 40, beispielsweise eine Blende, ist nach der Abzweigung der Umgehungsleitung 38 in die Hauptleitung 20 geschaltet und so dimensioniert, daß der Teilstrom durch das dritte Trockenmittelbett 32c kleiner als der dieses umgehende Hauptstrom ist. Die noch zu beschreibende Wärmeaufnahme im dritten Trockenmittelbett 32c ist dadurch nur so groß, daß im Trockengaserhitzer 18, falls erforderlich, noch eine Aufheizung des Trockengases zur Temperaturregulierung erfolgen kann.

Hinter dem zweiten Trockenmittelbett 32b ist in die Hauptleitung 20 ein Taupunkt-Meßfühler 42 geschaltet, der elektrisch mit einer Steuerschaltung 44 verbunden ist, welche ihrerseits eine Umschalteinrichtung 46 betätigt, deren Funktion nachstehend noch näher erläutert wird.

In einem vierten Trockenmittelbett 32d wird das gesättigte Adsorptions-Trockenmittel regeneriert. Hierzu wird über ein Filter 48 mittels eines Gebläses 50 Umgebungsluft angesaugt und über eine Leitung 52 und einen Lufterhitzer 54 in das vierte Trockenmittelbett 32d geleitet. In diesem wird das Trockenmittel durch den Heißluftstrom regeneriert. Sobald das Trockenmittel im vierten Trockenmittelbett 32d vollständig getrocknet ist, steigt die Temperatur in der Abgasleitung 56 sprunghaft an, weil dann der Teil der vom Lufterhitzer 54 erzeugten Wärme, die bisher zum Verdampfen des adsorbierten Wassers benötigt wurde, zusätzlich zum Aufheizen des Heißluftstromes frei wird. Da jedoch nach der vollständigen Trocknung des Trockenmittels eine Abkühlung erfolgen soll, sendet ein in die Abgasleitung 56 eingesetzter Thermostat 58 bei Auftreten des genannten Temperatursprunges ein Signal zu einer Schalteinrichtung 60, die dann den Lufterhitzer 54 und nach einer gewissen Zeit auch das Gebläse 50 abschaltet.

An der Steuerschaltung 44 kann ein bestimmter Feuchtigkeitsgrad eingeschaltet werden, der hier der vollständigen Sättigung des Adsorptions-Trockenmittels entspricht. Sobald in dem Taupunkt-Meßfühler 42 in der Hauptleitung 20 das Erreichen des eingestellten, effektiven Feuchtigkeitsgehaltes und damit eine Oberschreitung des gewünschten Taupunktes festgestellt wird, bedeutet das, daß das erste Trockenmittelbett 32a voll gesättigt und die Massenübertragunszone aus diesem in das zweite Trockenmittelbett 32b hinübergewandert ist. Jetzt betätigt die Steuerschaltung 44 die Umsteuereinrichtung 46, welche nun gestrichelt dargestellte Kupplungen 62 zwischen den vier Trockenmittelbetten 32a, 32b, 32c, 32d sowie den in diese und aus diesen herausführenden Leitungen löst und anschließend die Trockenmittelbetten in Richtung des in die Umschalteinrichtung 46 eingezeichneten Pfeiles so verstellt, daß das in der Zwischenzeit regenerierte Trockenmittelbett 32d an die Stelle des Trockenmittelbettes 32c kommt, während letzteres die Stelle des Trockenmittelbettes 32b einnimmt. Das nur teilweise gesättigte Trockenmittelbett 32b tritt an die Stelle des vollständig gesättigten Trockenmittelbettes 32a, welches seinerseits die bisherige Stellung des Trockenmittelbettes 32d einnimmt, um dort regeneriert zu werden.

Nach dieser Umschaltung werden die Kupplungen 62 wieder geschlossen, um die Trockenmittelbetten mit den entsprechenden Eingangs- und Ausgangsleitungen dicht zu verbinden.

Nach dem beschriebenen Umschalten wird das nur teilweise gesättigte Trockenmittelbett 32b, das sich nunmehr in der in Figur 4 gezeigten, obersten Stellung befindet, zum Trocknen des Trockengases herangezogen, bis auch dieses wieder vollständig gesättigt ist.

Das dritte Trockenmittelbett 32c, das zuvor an der in Figur 4 untersten Stellung regeneriert worden war, wird zur Vorwärmung eines Teils des Trockengasstromes ausgenutzt, wodurch es gleichzeitig gekühlt wird.

Die Steuerschaltung 44 ist elektrisch mit der Schalteinrichtung 60 verbunden, weil bei Beginn einer neuen Regenerierung des Trockenmittelbettes 32d sichergestellt sein muß, daß der Lufterhitzer 54 wieder eingeschaltet wird. Ein Thermostat 64 sorgt dafür, daß die vom Lufterhitzer 54 erzeugte Heißluft die erforderliche Temperatur beibehält.

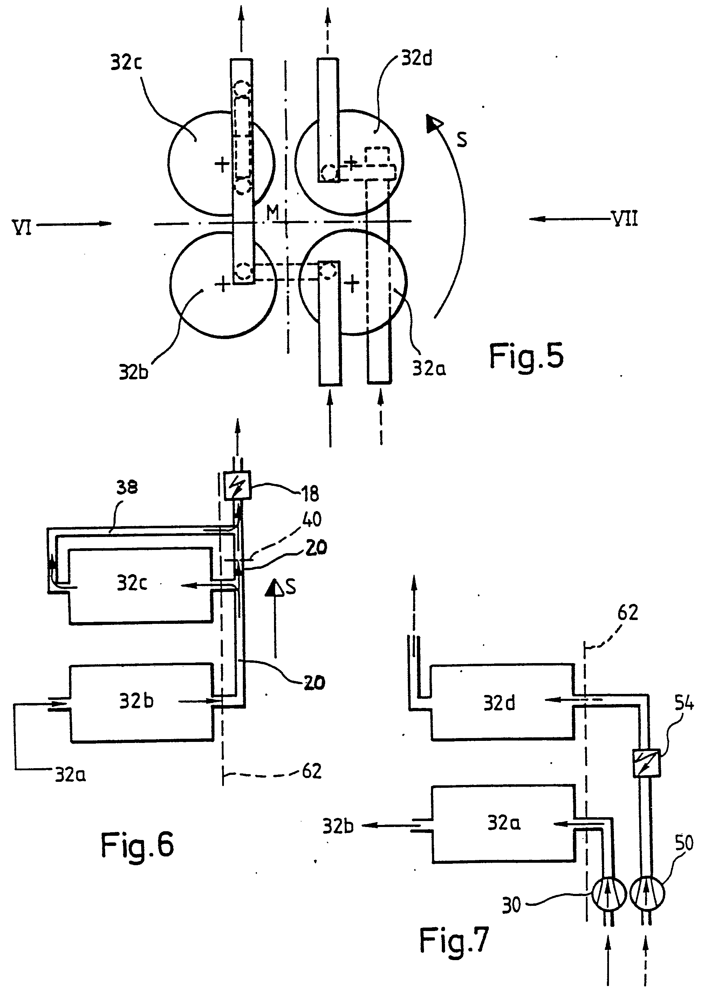

Figur 5 zeigt schematisch ein praktisches Ausführungsbeispiel, bei dem die vier Trockenmittelbetten 32a, 32b, 32c und 32d in Kreisanordnung auf einem nicht näher dargestellten Karussell befestigt sind, das in Richtung des eingezeichneten Pfeiles über die in Figur 4 skizzierte Umschalteinrichtung 46 in Schritten von 90° drehbar ist. Die Kupplungen 62, die in den Figuren 6 und 7 gestrichelt angedeutet sind, können beispielsweise an sich bekannte Drehschieber sein.

Die Seitenansicht der Figur 6 zeigt das zweite, nur teilweise gesättigte Trockenmittelbett 32b, von dem über die Leitung 38 ein Teilstrom des entfeuchteten Trockengases in das dritte Trockenmittelbett 32c strömt, während der andere Teilstrom über die Drossel 40 in der Hauptleitung 20 sofort dem Trockengaserhitzer 18 und danach dem Trockenbehälter 12 zugeführt wird.

Die Seitenansicht der Figur 7 zeigt das erste Trockenmittelbett 32a, dessen Ausgang zum zweiten Trockenmittelbett 32b führt. Weiter ist das vierte Trockenmittelbett 32d skizziert, das zum Regenerieren dient.

In Abänderung des Ausführungsbeispiels der Figur 4 wäre es auch möglich, den Taupunkt-Meßfühler 42 in die Verbindungsleitung 34 zu schalten, um die Sättigung des ersten Trockenmittelbettes 32a unmittelbar festzustellen. Da jedoch in jedem Fall die Feuchtigkeit des Trockengases hinter dem zweiten Trockenmittelbett 32b interessiert, ist es kostengünstiger, den Taupunkt-Meßfühler 42 wie in Figur 4 hinter das zweite Trockenmittelbett 32b zu schalten und an dieser Stelle Rückschlüsse auf die Feuchtigkeit des Trockenmittels am Ausgang des ersten Trockenmittelbettes 32a zu ziehen.

In weiterer Abänderung der beschriebenen Erfindung besteht auch die Möglichkeit, die Trockenmittelkolonne nicht nur in zwei Trockenmittelbetten 32a, 32b aufzuteilen, sondern in drei oder mehr Trockenmittelbetten.

## Patentansprüche

1. Verfahren zum Entfeuchten eines Trockengases, das nach dem Durchströmen eines zu trocknenden Stoffes in einem Adsorptions-Trockenmittel getrocknet und anschließend erhitzt wird, um dann wieder durch den Stoff geleitet zu werden, wobei das Trockenmittel nach Erreichen eines bestimmten Feuchtigkeitsgehaltes gegen ein zwischenzeitlich regeneriertes Trockenmittel ausgetauscht und seinerseits durch Wärmezufuhr regeneriert wird und wobei das Trockengas hintereinander durch eine erste Menge des Trockenmittels und anschließend durch eine zweite Menge des Trockenmittels geleitet wird, die bei vollständiger Sättigung der ersten Menge des Trockenmittels an deren Stelle tritt und durch eine zwischenzeitlich regenerierte, dritte Menge des Trockenmittels ersetzt wird, während die gesättigte, erste Menge des Trockenmittels regeneriert wird, dadurch gekennzeichnet, daß das Trockengas hinter der zweiten Menge des Trockenmittels in einem Teilgasstrom durch die dritte, inzwischen thermisch regenerierte Menge des Trockenmittels geleitet und hinter dieser dem zu dem zu trocknenden Stoff geleiteten, die dritte Trockenmittelmenge umgehenden Hauptgasstrom wieder zugeführt wird und daß jeweils eine vierte Menge des Trockenmittels zur Regenerierung von einem Wärmemedium durchströmt ist.

2. Verfahren nach Anspruch 1, dadurch gekennzeichnet, daß bei der Regenerierung der jeweiligen Menge des Trockenmittels die Wärmezufuhr in das Trockenmittel unterbrochen wird, sobald die Temperatur des Wärmemediums hinter dem Trockenmittel sprunghaft ansteigt.

3. Vorrichtung zum Entfeuchten eines zum Trocknen von festen Stoffen, insbesondere von körnigen Kunststoffen dienenden Trockengases mit wenigstens zwei von dem Trockengas durchströmten Trockenmittelbetten, von denen eine Hauptleitung zu dem zu trocknenden Stoff führt, dadurch gekennzeichnet, daß vier in gleichbleibender Reihenfolge gegeneinander austauschbare Trockenmittelbetten (32a, 32b, 32c, 32d) vorgesehen sind, von denen das vierte Trockenmittelbett (32d) zur Regenerierung von einem Wärmemedium durchströmt ist, während das erste Trockenmittelbett (32a) über eine Verbindungsleitung (34) in Reihe mit dem nachgeschalteten, zweiten Trockenmittelbett (32b) verbunden ist, und daß in die Hauptleitung (20) hinter dem zweiten Trockenmittelbett (32b) ein Taupunkt-Meßfühler (42) geschaltet ist, der mit einer Steuerschaltung (44) verbunden ist, die eine Umschalteinrichtung (46) betätigt, welche bei vollständiger Sättigung des ersten Trockenmittelbettes (32a) an dessen Stelle das zweite Trockenmittelbett (32b) setzt, und wobei von der zu dem zu trocknenden Stoff führenden Hauptleitung (20) hinter dem zweiten Trockenmittelbett (32b) eine Umgehungsleitung (38) abzweigt und über das zur Hauptleitung (20) parallel geschaltete, dritte Trockenmittelbett (32c) führt.

4. Vorrichtung nach Anspruch 3, dadurch gekennzeichnet, daß in die Hauptleitung (20) nach der Abzweigung der Umgehungsleitung (38) eine Drossel (40) geschaltet ist.

5. Vorrichtung nach Anspruch 4, dadurch gekennzeichnet, daß in eine Abgasleitung (56) des vierten Trockenmittelbettes (32d) ein Thermostat (58) geschaltet ist, der über eine Schalteinrichtung (60) mit einem Lufterhitzer (54) verbunden ist, wobei die Schalteinrichtung (60) bei einem sprunghaften Temperaturanstieg am Thermostaten (58) den Lufterhitzer (54) abschaltet.

6. Vorrichtung nach einem der Ansprüche 3 bis 5, dadurch gekennzeichnet, daß die vier Trockenmittelbetten (32a, 32b, 32c, 32d) in Kreisanordnung auf einem Karussel befestigt sind, das über die Umschalteinrichtung (46) in 90°-Schritten drehbar und über Drehschieber (62) mit den jeweiligen Leitungen und Verbindungsleitungen koppelbar ist.

## Claims

1. Process for removing moisture from a drying gas, which gas after flowing through a substance to be dried is dried in an adsorption drying agent, thereafter heated and finally conducted through the substance to be dried, in which the drying agent, after it has reached a given degree of moisture, is replaced by a newly regenerated drying agent while it is itself regenerated by the application of heat, and in which the drying gas is sequentially conducted through a first mass of drying agent and through a second mass of drying agent which takes the place of the first mass of drying agent when the latter has become fully saturated and, while the saturated first mass of drying agent is being regenerated, is replaced by a third mass of drying agent which has been regenerated in the meantime, characterized by the fact that a partial stream of the drying gas is conducted, behind the second mass of drying agent, through the third mass of drying agent which has been thermally regenerated in the meantime, and is then returned, behind the third mass of drying agent, to the main stream of drying gas which has bypassed said third mass of drying agent and is conducted to the substance to be dried, wherein a fourth mass of drying agent is regenerated with a heating medium.

2. Process as claimed in claim 1, wherein the feeding of heat to the mass of drying agent during its regeneration is interrupted as soon as the temperature of the heating medium suddenly increases behind said mass of drying agent.

3. Apparatus for removing moisture from a drying gas used for the drying of solid substances, particularly granular plastics, the apparatus having at least two beds of drying agent through which the drying gas flows end from which a main line is leading to the substance to vbe dried, characterized in that four beds (32a, 32b, 32c, 32d) of drying agent are provided, the beds being exchangeable for each other in constant sequence, the respective fourth bed (32d) of drying agent being regenerated by a heating medium, the first bed (32a) of drying agent being connected by a connecting line (34) in series to the following second bed (32b) of drying agent, and further characterized in that a dew-point measurement sensor (42) is connected to said main line (20) behind said second bed (32b) of drying agent, said sensor being connected to a control unit (44) actuating a switching device (46) which, upon complete saturation of the firstbed (32a) of drying agent, replaces said first bed (32a) by said second bed (32b) of drying agent, wherein behind the second bed (32b) of drying agent a bypass line (38) branches off said main line (20) leading to the substance to be dried, said bypass line (38) extending via the third bed (32c) of drying agent and connecting said third bed (32c) in parallel to said main line (20).

4. Apparatus as claimed in claim 3, wherein a throttle (40) is arranged in the main line (20) behind the branching point of said bypass line (38).

5. Apparatus as claimed in claim 4, wherein a thermostat (58) is connected to the off-gas line (56) of the fourth bed (32d) of drying agent, which thermostat (58) is connected via switching means (60) with an air heater (54), the switching means (60) disconnecting said air heater (54) upon a sudden increase of temperature on said thermostat (58).

6. Apparatus as claimed in anyone of claims 3 to 5, wherein the four beds (32a, 32b, 32c, 32d) of drying agent are arranged in a circle on a carousel, the carousel being adapted to be turned in steps of 90° by said switching device (46) and being further adapted to be coupled by a rotary slide (62) with the corresponding lines and connecting lines.

## Revendications

1. Procédé pour l'enlèvement d'humidité d'un gaz de séchage, qui, après passage dans une matière à sécher, est séché par passage dans une masse de séchage par absorption puis ensuite chauffé avant d'être renvoyé vers la matière à sécher, procédé dans lequel la masse de séchage, lorsqu'elle atteint une teneur en humidité définie, est remplacée par une masse de séchage ayant subi un traitement préalable de régénération et est à son tour régénérée par apport thermique, procédé dans lequel le gaz de séchage traverse successivement une première masse de séchage puis une seconde masse de séchage, cette seconde masse de séchage se substituant à la première lorsque celle-ci est saturée, et étant elle-même remplacée par une troisième masse de séchage, ayant été au préalable régénérée, caractérisé en ce que le gaz de séchage, après passage dans la seconde masse de séchage, est pour une partie passée dans la troisième masse de séchage, auparavant régénérée par voie thermique, et, après ce passage, réunie à l'autre partie ayant contourné la troisième masse de séchage et en ce que, une quatrième masse est régénérée par passage d'un agent de chauffage.

2. Procédé selon la revendication 1, caractérisé en ce que, lors de la régénération de la masse de séchage correspondante, on interrompt l'apport thermique dans la masse de séchage, dès qu'un saut de température de l'agent de chauffage en aval du milieu de séchage.

3. Dispositif pour l'enlèvement d'humidité d'un gaz de séchage servant à sécher des composés solides, en particulier de grains de matière plastique, comportant au moins deux lits de séchage traversé par le gaz de séchage desquels une conduite principale conduit à la masse à sécher, caractérisé en ce qu'on utilise quatre lits de séchage (32a, 32b, 32c, 32d) successifs et permutables, placés selon une succession invariable, le quatrième lit de séchage (32d) étant traversé par un agent de chauffage qui le régénère tandis que le premier lit de séchage (32a) est relié en série au second lit de séchage via une conduite de liaison (34) et en ce que l'on a un détecteur (42) de point de rosée est disposé en aval du second lit de séchage (32b) sur la conduite principale (20), ce détecteur étant relié à un commutateur de commande (44) qui actionne un dispositif de commutation (46), lequel, substitué au premier lit de séchage (32a) le second lit de séchage (32b) lorsque le premier est totalement saturé, et en ce que la conduite principale (20) conduisant vers la matière à sécher forme en aval du second lit de séchage (32b), une conduite de dérivation (38) qui après passage dans le troisième lit de séchage placé en parallèle rejoint la conduite principale (20).

4. Dispositif selon la revendication 3, caractérisé en ce que l'on dispose sur la conduite principale (20), en aval le point de branchement de la ligne de dérivation (38), un étranglement (40).

5. Dispositif selon la revendication 4, caractérisé en ce que dans la conduite d'évacuation des gaz (56) du quatrième lit de séchage (32d) on dispose un thermostat (58) qui est relié, par l'intermédiaire du dispositif de commutation (60) avec un dispositif de chauffage (54) de façon qu'en cas de saut brusque de température au thermostat (58), le dispositif de commutation (60) provoque l'arrêt du dispositif de chauffage d'air (54).

6. Dispositif selon l'une des revendications 3 à 5, caractérisé en ce que les quatre lits de séchage (32a, 32b, 32c, 32d) sont assemblés en formant un carrousel qui, peut tourner par pas de 90°, commandé par le dispositif de commutation (46), et que l'on peut coupler, à l'aide des moyens de commutation (62) avec les différents conduites d'arrivée et de liaison.

Fig.1

Fig. 2

Fig. 3

Fig.4

Fig.5

Fig.6

Fig.7

3.